# EUROPEAN PATENT APPLICATION

(11) **EP 1 704 984 A1**
(43) Date of publication of application: **27.09.2006**
(21) Application number: 06075663.2
(22) Date of filing: 22.03.2006
(51) Int. Cl.: B29C 45/17

(54) **Device and method for injection moulding**

(30) Priority: 24.03.2005 BE 200500161; 08.11.2005 BE 200500538
(71) Applicant: D.W. PLASTICS, naamloze vennootschap, 3740 Bilzen-Beverst (BE)
(72) Inventor: Isenborghs, Francis, 1350 Jauche (BE)
(74) Representative: Donné, Eddy

(57) **Abstract**

Device for injection moulding plastic objects, such as bottle cases, whose largest dimension amounts to at least 30 cm, which device comprises an injection unit (2) and a sealing unit (3), characterised in that the device (1) is made such that at least the injection unit (2) and/or the sealing unit (3) can be placed on a semi-trailer (4) or the like.

## Description

The present invention concerns a device and a method for injection moulding plastic objects such as for example bottle cases.

Injection moulding is known to be an appropriate production technique for manufacturing objects that must be made in large quantities, such as pallets, dishes and the like.

Such plastic objects are best made in large series, since adjusting the relatively large moulds is usually very time-consuming, which implies high costs, if only because of the standstill of the injection machine.

A problem that occurs is that plastic objects of such sizes take up a lot of volume, which may be problematic for their temporary storage and for their transport to the customer, such as for example in the case of bottle cases to the brewery or the bottling plant.

The transport of these large quantities of relatively sizeable objects, such as for example thousands of bottle cases from the plant to the customer implies huge costs.

Moreover, the transport and coordination thereof is very time-consuming, which is particularly annoying when the design is changed or orders are suddenly changed.

It is also pointed out that these voluminous transports are not favourable to the social problems of air pollution and traffic congestions.

Moreover, it is known that transport via the public highway often results in an unforeseen delay of the actual delivery, which often causes major problems if the customer has gone through his supplies.

The injection moulding machines that are used for manufacturing such relatively large plastic pieces usually comprise an injection unit and a sealing unit, whereby the injection unit comprises a feed for the raw plastic granules and whereby the sealing unit usually comprises a mould, two backing plates and four guides.

It is generally known that such injection moulding machines, especially those that are designed for manufacturing relatively large plastic parts, are very heavy and sizeable and, once in place, are normally not moved anymore. They moreover require a precise alignment which takes at least two days and must be done by specialists.

The present invention aims to remedy the above-mentioned and other disadvantages and provides a device and a method for injection moulding which eliminates the need to transport the manufactured objects to the customer.

To this end, the present invention concerns a device for injection moulding plastic objects whose largest size amounts to at least 30 cm, such as bottle cases and the like, which device comprises an injection unit and a sealing unit, whereby the device is made such that at least the injection unit or the sealing unit can be placed on a semitrailer or the like.

A major advantage consists in that a semitrailer or the like can be easily moved, if necessary also via the public highway, railway or inland navigation, such that we can speak of a transportable or mobile injection moulding device.

A major advantage consists in that, once produced, the plastic objects are at their destination without any considerable transport.

Indeed, by making use of a transportable injection moulding device which can be put into action at any chosen location, such as for example in the case of the production of bottle cases in a brewery or bottling plant, the production is moved to the place of destination of the finished products.

The transport phase of the finished plastic objects to the customer is thus eliminated, and the communication lines are considerably shortened.

By providing a transportable injection moulding device which makes it possible to injection-mould relatively sizeable objects such as bottle cases, a new and very flexible production method is obtained.

According to a preferred embodiment, the injection unit and the sealing unit are made such that they can be placed as a single unit on a semi-trailer or the like.

This is advantageous in that the alignment of both units, after the mobile injection moulding device has been moved and before it is put into use, is restricted to a minimum.

According to a special embodiment, the injection unit and the sealing unit are provided with at least one chassis, integrated with the framework of the semi-trailer.

Such an embodiment is advantageous in that the total weight of the device, the semi-trailer and the lorry is strongly reduced. Weight restriction is of major importance, as we can thus avoid that the conveyance of the device according to the invention over the public highway is subject to the rules of exceptional transport.

The same applies to the dimensions of the machine and the semi-trailer, together with the lorry.

According to the European regulations in force, transports with a width of no more than 2.5 m, a height of no more than 4.0 m and a total weight of no more than 29 tons are regarded as normal, and thus they require no special precautions.

The invention also concerns a method for the injection moulding of plastic objects whose largest dimension amounts to at least 30 cm, such as bottle cases, whereby the injection moulding takes place at the place of delivery of the plastic objects.

According to a special embodiment, the method comprises at least one or several of the following steps:
- providing a transportable or mobile injection moulding device at the desired place of delivery of the plastic objects;
- erecting and aligning this injection moulding device;
- supplying energy to drive the transportable injection moulding device;
- providing raw plastic up to the transportable injection moulding device;
- the injection moulding of the plastic objects.

According to a simple embodiment, the device according to the invention is mainly built in accordance with a conventional injection moulding machine, and it consists of an injection unit on the one hand, and a sealing unit on the other hand, whereby the injection unit is provided with an inlet for the raw plastic granules, and whereby the sealing unit comprises a mould, two backing plates and four guides.

In order to better explain the characteristics of the invention, the following preferred embodiment of a device for injection moulding according to the invention is given as an example only without being limitative in any way, with reference to the accompanying drawing, in which:

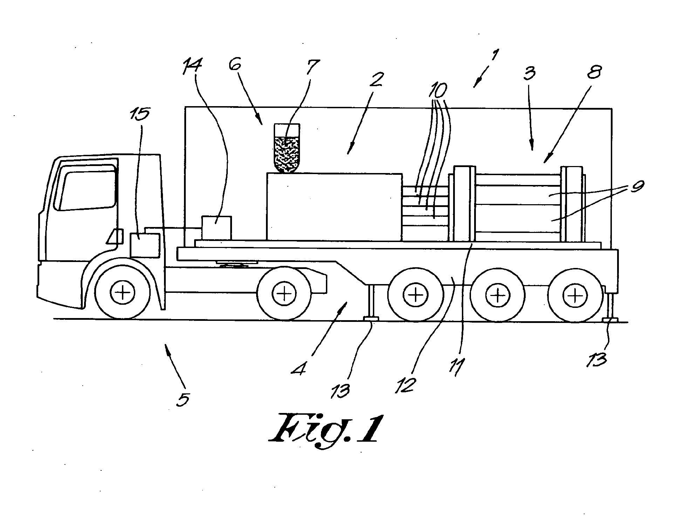

figure 1 schematically represents a preferred embodiment of a device for injection moulding according to the invention, as a section.

Figure 1 represents a device 1 for injection moulding which mainly consists of an injection unit 2 and a sealing unit 3, both provided in this embodiment and as a single unit on a single semi-trailer 4 with a lorry 5 in front of it.

The injection unit 2 comprises a feed 6 for the raw plastic granules 7, whereas the sealing unit 3 comprises a mould 8, two backing plates 9 and four guides 10.

The injection unit 2 and the sealing unit 3 are special in this embodiment in that the chassis 11 on which they are provided is integrated with the framework 12 of the semi-trailer 4.

To that end, the framework 12 of the semi-trailer 4 is preferably designed in accordance with the foundation plan, or in other words as a foundation element of the device 1 for injection moulding.

Apart from the usual structure, the semi-trailer 4 is also provided with eight retractable supporting legs 13, four on each side, which supporting legs 13 reach the ground when lowered.

Further, the device 1 according to this embodiment is provided with a generator 14 to generate the electric driving force, which generator 14 is directly driven by the motor 15 of the lorry 5 according to the invention.

The method for the injection moulding of plastic objects according to the invention can be carried out for example by means of the above-described device 1 for injection moulding, and it differs from the usual methods as far as the preparatory and finishing actions are concerned that need to be carried out for the injection moulding of the plastic parts.

Indeed, as opposed to a usual method for injection moulding, the above-described mobile device 1 for injection moulding must be first taken to the desired place of delivery of the plastic products, where the production will be organised.

Once positioned, the supporting legs 13 are lowered to the ground and locked in the required position. The supporting legs 13 directly support the framework 12 in that position, such that the flexibility of the suspension and of the tyres of the semi-trailer 4 is taken away and such that a rigid connection is realised between the injection device 1 and the environment of the production site, in this case the solid ground.

Next, the above-described mobile device 1 for injection moulding according to the invention is aligned.

Then, the necessary electric driving force is provided for, if necessary generated by the motor 15 of the lorry 5 which can be coupled to the generator 14.

The method according to the invention for injection moulding plastic objects whose largest dimension amounts to at least 30 cm, such as bottle cases, then comprises the usual steps that are also taken in case of a conventional stationary injection device.

As soon as the entire series has been produced as desired, the mobile injection device 1 according to the invention must be prepared for transport to a following production site.

To that end, the mobile parts of the device 1 are preferably immobilized, such that they cannot cause any damage during transport.

The mould of the completed job and the mould of the next job can be removed, put in place respectively on one of the production sites or, if the situation allows it, the device 1 according to the invention can be taken to the maintenance workshop to that end, where the infrastructure is ideal for changing moulds.

The present invention is by no means limited to the embodiment given as an example and represented in the accompanying drawings; on the contrary, such a device for injection moulding and such a method according to the invention can be made according to all sorts of variants while still remaining within the scope of the invention.

## Claims

1. Device for injection moulding plastic objects, such as bottle cases, whose largest dimension amounts to at least 30 cm, which device comprises an injection unit (2) and a sealing unit (3), **characterised in that** the device (1) is made such that at least the injection unit (2) and/or the sealing unit (3) can be placed on a semi-trailer (4) or the like.

2. Device according to claim 1, **characterised in that** the injection unit (2) and the sealing unit (3) are made such that that they can be placed as a single unit on a single semi-trailer (4) or the like.

3. Device according to claim 1 or 2, **characterised in that** the injection unit (2) and the sealing unit (3) are provided on at least one chassis (11) which is integrated with the framework (12) of the semi-trailer (4) or the like.

4. Device according to claim 3, **characterised in that** the framework (12) of the semi-trailer (4) or the like is made as a foundation element of the injection unit (2) and/or the sealing unit (3).

5. Device according to claim 1, **characterised in that** the device is provided with a generator (14) which can be driven by the motor (15) of a lorry (5) of the semi-trailer (4) or the like, or by the motor (15) of the lorry.

6. Semi-trailer (4) for conveying a device according to one or several of claims 1 to 5, **characterised in that** the semi-trailer (4) is provided with a framework (12) which is integrated with at least the chassis (11) of the injection unit (2) and/or of the sealing unit (3).

7. Semi-trailer (4) according to claim 6, **characterised in that** it is provided with retractable supporting legs (13), for example two or four on each side.

8. Method for injection moulding plastic objects, such as bottle cases, whose largest dimension amounts to at least 30 cm, **characterised in that** the injection moulding takes place at the place of delivery of the plastic objects.

9. Method according to claim 8, **characterised in that** the method comprises at least the following steps:
- providing a transportable or mobile injection moulding device (1) at the desired place of delivery of the plastic objects;
- erecting this injection moulding device (1);
- supplying energy to drive the transportable injection moulding device (1);
- providing raw plastic up to the transportable injection moulding device (1);
- the injection moulding of the plastic objects.

10. Method according to claim 9, **characterised in that** the method comprises the step of aligning the injection moulding device (1), in particular after it has been erected.

11. Method according to claim 9, **characterised in that** the erection comprises at least realising a rigid connection between the injection-device (1) and the solid environment at the production site, for example with the solid ground.

12. Method according to claim 9, **characterised in that** the energy for driving the transportable injection moulding device (1) is supplied by a generator (14) which is driven by means of a motor (15) provided on the transport means of the device, for example on a lorry (5).

13. Method according to claim 9, **characterised in that** the method is at least followed by the step of preparing the injection moulding device (1) for transport, which implies at least the immobilization of certain moving parts.
